# EUROPÄISCHE PATENTSCHRIFT

(11) **EP 3 296 059 B1**
(45) Veröffentlichungstag und Bekanntmachung des Hinweises auf die Patenterteilung: **07.08.2019**
(21) Anmeldenummer: 17191231.4
(22) Anmeldetag: 15.09.2017
(51) Int. Cl.: B23Q 39/04, B23Q 7/14

(54) **PALETTENWECHSLER UND VERFAHREN ZUM BEARBEITEN EINES AUF EINER VERFAHRBAREN PALETTE ANGEORDNETEN PLATTENFÖRMIGEN MATERIALS**
PALLET CHANGER AND METHOD FOR MACHINING PLATE-FORMED MATERIAL ARRANGED ON A MOVABLE PALLET
CHANGEUR DE PALETTES ET PROCÉDÉ DE TRAITEMENT D'UN MATÉRIAU EN FORME DE PLAQUE DISPOSÉ SUR UNE PALETTE DÉPLAÇABLE

(30) Priorität: 20.09.2016 DE 102016117681
(43) Veröffentlichungstag der Anmeldung: 21.03.2018
(73) Patentinhaber: Trumpf Werkzeugmaschinen GmbH + Co. KG, 71254 Ditzingen (DE)
(72) Erfinder: Schmauder, Frank, 72555 Metzingen (DE)
(74) Vertreter: Mammel und Maser

(56) Entgegenhaltungen:
- EP-A1- 1 747 843
- DE-A1- 10 030 997
- DE-U1-202011 051 331
- US-A1- 2003 127 440

## Beschreibung

Die Erfindung betrifft einen Palettenwechsler mit wenigstens zwei von einem Grundgestell aufgenommenen und verfahrbaren Paletten, welche jeweils eine Auflagefläche zur Aufnahme von einem plattenförmigen Material aufweisen sowie ein Verfahren zum Bearbeiten eines auf einer verfahrbaren Palette angeordneten plattenförmigen Materials.

Aus der US 2003/0127440 A ist ein Palettenwechsler bekannt, der einer Bearbeitungsmaschine, wie beispielsweise einer Laserschneidmaschine, zugeordnet ist. Dieser Palettenwechsler umfasst eine obere und untere Palette, welche abwechselnd in die Laserschneidmaschine eingefahren werden, um das auf einer Auflagefläche der Palette aufliegende plattenförmige Material zu bearbeiten. Nach der Bearbeitung des plattenförmigen Materials wird die Palette aus der Bearbeitungsmaschine herausgefahren und in den Palettenwechsler zurückgeführt, wobei die zweite Palette zwischenzeitlich mit einem weiteren plattenförmigen Material beladen wurde und in die Bearbeitungsmaschine eingefahren wird. Durch einen solchen Palettenwechsler wird während der Bearbeitung des plattenförmigen Materials auf einer beladenen und in die Bearbeitungsmaschine eingefahrenen Palette die sich in dem Palettenwechsler befindende Palette vorbereitend für den nachfolgenden Bearbeitungsvorgang mit einem plattenförmigen Material beladen. Das bereits bearbeitete plattenförmige Material wird aus der Bearbeitungsmaschine herausgefahren, die Palette mit dem bearbeiteten plattenförmigen Material wird entladen und anschließend mit einem weiteren zu bearbeitenden plattenförmigen Material beladen.

Die Bearbeitungsdauer des plattenförmigen Materials in der Bearbeitungsmaschine, welche auch "Hauptbearbeitungszeit" genannt wird, ist zeitintensiver als die Zeitdauer zum Entladen des bearbeiteten plattenförmigen Materials und zum Beladen mit einem zu bearbeitenden plattenförmigen Material, welches auch als "Nebenarbeitszeit" bezeichnet wird. Aufgrund der geringeren Nebenarbeitszeit des Palettenwechslers gegenüber der Hauptbearbeitungszeit der Bearbeitungsmaschine liegen am Palettenwechsler hohe Stillstandszeiten vor.

Außerhalb des Palettenwechslers werden in separaten Arbeitsschritten zusätzliche Bearbeitungsschritte durchgeführt, wie beispielsweise das Kennzeichnen oder Markieren des plattenförmigen Materials, das Setzen von Bohrungen, Entgraten, Gewindeschneiden oder dergleichen. Das benötigt Platz. Sofern diese zusätzlichen Bearbeitungen nicht in separaten Bearbeitungsstationen durchgeführt werden, sondern durch die Bearbeitungsmaschine, wird die Hauptbearbeitungszeit durch diese zusätzlichen Bearbeitungen verlängert.

Der Erfindung liegt die Aufgabe zugrunde, einen Palettenwechsler mit wenigstens zwei verfahrbaren Paletten sowie ein Verfahren zum Bearbeiten eines auf einer verfahrbaren Palette angeordneten plattenförmigen Materials vorzuschlagen, wodurch die Dauer eines Bearbeitungszyklus zum Bearbeiten des plattenförmigen Materials optimiert und verkürzt wird.

Diese Aufgabe wird durch einen Palettenwechsler mit wenigstens zwei verfahrbaren Paletten gelöst, die von einem Grundgestell aufgenommen werden, bei welchem eine Bearbeitungseinrichtung an dem Grundgestell des Palettenwechslers vorgesehen ist, so dass das auf der Palette aufliegende plattenförmige Material im Palettenwechsler unabhängig von einer Bearbeitungsmaschine für das plattenförmige Material bearbeitet werden kann. Dadurch kann sowohl ein noch nicht bearbeitetes plattenförmiges Material vorbereitend für die nachfolgenden Bearbeitungsprozesse in der Bearbeitungsmaschine bearbeitet werden als auch ein bereits durch die Bearbeitungsmaschine bearbeitetes plattenförmiges Material oder daraus hergestellte Werkstücke, nachdem dieses oder diese aus der Bearbeitungsmaschine herausgeführt und die Palette in den Palettenwechsler positioniert sind. Diese am Palettenwechsler vorgesehene Bearbeitungseinrichtung, die unabhängig von der Bearbeitungsmaschine ist, ermöglicht, dass zusätzliche Funktionalitäten, wie beispielsweise das Kennzeichnen oder Markieren des plattenförmigen Materials oder der Werkstücke, das Einbringen von Bohrungen oder das Entgraten, das Gewindeschneiden oder dergleichen nicht hauptzeitunterbrechend ausgeführt werden, sondern in der Nebenarbeitszeit, so dass diese Tätigkeiten parallel zur Hauptbearbeitungszeit erfolgen können. Dadurch wird eine Verkürzung der gesamten Bearbeitungsdauer und eine Optimierung des Platzbedarfs ermöglicht, da neben dem Palettenwechsler keine zusätzlichen Bearbeitungsstationen diesem vor- oder nachgeschalten sind.

Bevorzugt weist die Bearbeitungseinrichtung ein Bearbeitungswerkzeug auf, welches zumindest teilweise innerhalb einer Auflagefläche der Palette verfahrbar ist. Dadurch kann eine Bearbeitung des auf der Auflagefläche der Palette aufliegenden Materials vollflächig angesteuert werden.

In Abhängigkeit der Flexibilität und Einsatzmöglichkeiten kann die Bearbeitungseinrichtung eine feststehende oder auch eine verfahrbare Linearachse aufweisen. Alternativ können auch ein Zwei- oder Drei-Linearachsensystem an dem Palettenwechsler vorgesehen sein.

Die Bearbeitungseinrichtung ist bevorzugt als eine entlang einer Ein- und Ausfahrrichtung der Palette verfahrbare Linearachse ausgebildet. Diese Linearachse ist in X-Richtung verfahrbar. An der Linearachse ist bevorzugt eine Y-Vorrichtung verfahrbar am Bearbeitungswerkzeug vorgesehen. Dadurch kann der Bearbeitungskopf oberhalb der Auflagefläche der Palette in einer parallelen Ebene dazu verfahren werden. Bevorzugt kann das Bearbeitungswerkzeug in Z-Richtung verfahrbar von der Linearachse aufgenommen sein. Dadurch kann eine Höhenjustage zum plattenförmigen Material erfolgen, um eine Anpassung an unterschiedliche Plattenstärken oder Bearbeitungsanforderungen zu ermöglichen.

Bevorzugt ist vorgesehen, dass der Antrieb des Palettenwechslers eine Verfahrbewegung der Palette vom Grundgestell in die Bearbeitungsmaschine und wieder zurück ansteuert, sowie eine Verfahrbewegung der Bearbeitungseinrichtung entlang des Grundgestells. Dadurch wird eine Optimierung der Werkstückbearbeitung erzielt. Zudem kann eine Kosteneinsparung ermöglicht sein, da der zumindest eine Antrieb für das Wechseln der Palette als auch zum Betreiben der zusätzlichen Bearbeitungseinrichtung gemeinsam genutzt wird.

Bevorzugt ist die Bearbeitungseinrichtung von einem Mitnehmerelement, vorzugsweise schaltbaren Mitnehmerelement, verfahrbar angetrieben, welches von dem Antrieb angesteuert wird, der die Ein- und Ausfahrbewegung der Paletten ansteuert. Dadurch kann eine Reduzierung in der Anzahl der Antriebe beziehungsweise Motoren ermöglicht sein, so dass ein Motor zur Ansteuerung der Verfahrbewegung der Palette und zur Ansteuerung einer Verfahrbewegung der Bearbeitungseinrichtung genügt.

Bevorzugt sind das Antriebselement, welches die Paletten antreibt, und das Mitnehmerelement, welches die Bearbeitungseinrichtung verfahrbar antreibt, von derselben Motorachse des Motors angetrieben, und zwischen der Motorachse und dem Antriebselement oder der Motorachse und dem Mitnehmerelement oder bei beiden ist eine schaltbare Kupplung vorgesehen. Dadurch kann eine selektive Ansteuerung des Antriebselementes und/oder des Mitnehmerelementes ermöglicht sein.

Des Weiteren ist bevorzugt auf derselben Motorachse des Motors ein Antriebsrad für das Antriebselement und benachbart dazu ein Mitnehmerrad für das Mitnehmerelement vorgesehen. Dies ermöglicht eine besonders kompakte Bauweise des Palettenwechslers.

Eine weitere bevorzugte Ausgestaltung des Palettenwechslers sieht vor, dass an einem Träger des Grundgestells zwei verfahrbare Paletten aufgenommen sind, welche in einer Ausgangsposition übereinanderliegend angeordnet sind und der vorzugsweise Träger in Z-Richtung relativ zum Grundgestell verfahrbar ist, so dass eine der vom Träger aufgenommenen Paletten wahlweise in einer Startposition zum Ein- und Ausfahren in die Bearbeitungsmaschine positioniert ist. Dabei kann die weitere Palette in einer Zwischenposition oder Ruheposition vorgesehen sein. Durch den in Z-Richtung verfahrbaren Träger kann somit die für den nachfolgenden Bearbeitungsgang vorbereitete beziehungsweise mit einem plattenförmigen Material bestückte Palette in eine Einfahrposition gebracht und des Weiteren der Träger zur Aufnahme einer aus der Bearbeitungsmaschine kommenden Palette ebenfalls in eine Aufnahmeposition übergeführt werden, so dass aufeinanderfolgend und im Wechsel die Paletten ein- und ausgefahren werden.

Der Träger im Grundgestell des Palettenwechslers besteht bevorzugt aus zwei getrennt zueinander ausgebildeten Längsprofilen, welche jeweils für die zumindest zwei Paletten Laufflächen aufweisen, durch welche die Paletten verfahrbar und vorzugsweise geführt sind. Dadurch kann zum einen eine einfache Ein- und Ausfahrbewegung angesteuert werden. Zum anderen bedarf es durch die Führung der Palette über die Laufflächen keiner weiteren Ausrichtelemente, um eine gesicherte Positionierung der Paletten während dem Ein- und Ausfahren sowie in einer Ausgangsposition im Palettenwechsler zur Bearbeitung des plattenförmigen Materials zu ermöglichen.

Eine weitere bevorzugte Ausgestaltung des Palettenwechslers sieht vor, dass an dem Antriebselement zumindest ein erstes Koppelelement und an jeder Palette zumindest ein weiteres Koppelelement angeordnet ist und beim Verfahren der einen Palette in eine Einfahrposition das weitere Koppelelement der einen Palette mit dem ersten Koppelelement am Antriebselement in Eingriff kommt und wirkverbunden ist und die andere Palette, welche in die Zwischenposition oder Ruheposition verfahren wird, von dem Antriebselement entkoppelt ist. Dadurch kann ein schneller Wechsel in der Antriebsverbindung zum Ein- und Ausfahren der ersten oder zweiten beziehungsweise weiteren Palette erfolgen.

Das erste Koppelelement, welches an dem Antriebselement vorgesehen ist, ist bevorzugt als ein auf die Palette zuweisender Stift ausgebildet und das weitere an der Palette angeordnete Koppelelement weist bevorzugt eine U-förmige Führung auf, in welche der Stift während einer Verfahrbewegung der Palette in Z-Richtung in Eingriff oder außer Eingriff kommt. Dadurch genügt lediglich eine Verfahrbewegung in Z-Richtung, um eine Antriebsverbindung von der einen zur anderen Palette zu wechseln.

Eine weitere bevorzugte Ausgestaltung der Erfindung sieht vor, dass die Hubbewegung des Trägers relativ zum Grundgestell durch eine auf der Motorachse des Motors angeordnete oder damit gekoppelte Antriebskomponente angesteuert ist. Dadurch werden des Weiteren die Anzahl der Antriebe bei diesem Palettenwechsler als auch der Bauraum reduziert. Der Motor für die Ein- und Ausfahrbewegung der Palette, der auch die Bearbeitungseinrichtung ansteuert, kann gleichzeitig auch die Hubbewegung des Trägers durchführen.

Des Weiteren ist bevorzugt vorgesehen, dass zwischen dem Grundgestell und einer linken und rechten Längsseite der Palette jeweils das Antriebselement und die Antriebskomponente vorgesehen sind, die durch eine sich über die Breite des Grundgestells erstreckende Motorachse gemeinsam angetrieben sind. Dadurch kann in einfacher Weise eine Ansteuerung für die Palette bezüglich der Ein- und Ausfahrbewegung als auch bezüglich der Veränderung der Lage in Z-Richtung innerhalb des Palettenwechslers ermöglicht sein. Zudem wird dadurch ermöglicht, dass ein Raum oder Bereich unterhalb der Auflagefläche der jeweiligen Palette im Palettenwechsler freigehalten ist, so dass die Bearbeitung mit der Bearbeitungseinrichtung flexibel ausgestaltet werden kann.

Das Bearbeitungswerkzeug der Bearbeitungseinrichtung ist bevorzugt als ein materialabtragendes Werkzeug ausgebildet. Hierbei kann es sich um die Bearbeitung mittels eines Schneidstrahls, wie beispielsweise eines Laserstrahls, handeln. Des Weiteren können weitere Werkzeuge zur span-abhebenden Bearbeitung oder zum Abtrag von Oberflächenstrukturen oder dergleichen vorgesehen sein. Insbesondere ist das Bearbeitungswerkzeug zur Durchführung von Zusatzfunktionen vorgesehen, wie beispielsweise das Gravieren oder Markieren, insbesondere mittels eines Laserstrahls, das Entgraten, Bohren, Gewindeschneiden oder Ansenken.

Die der Erfindung zugrunde liegende Aufgabe wird des Weiteren durch ein Verfahren zum Bearbeiten eines auf einer verfahrbaren Palette angeordneten plattenförmigen Materials gelöst, bei welchem vor oder nach dem Bearbeiten des plattenförmigen Materials in der Bearbeitungsmaschine das auf der Palette aufliegende plattenförmige Material im Palettenwechsler mit zumindest einer Bearbeitungseinrichtung bearbeitet und unabhängig von einer Bearbeitung in der Bearbeitungsmaschine angesteuert wird. Die Palettenwechselzeiten, welche auch das Be- und Entladen sowohl des unbearbeiteten als auch bearbeiteten plattenförmigen Materials umfassen, sind kürzer als die Hauptbearbeitungszeiten des auf den Paletten aufliegenden plattenförmigen Materials in der Bearbeitungsmaschine. Die bisherige Stillstandszeit im Palettenwechsler kann nunmehr für zusätzliche Bearbeitungsschritte verwendet werden, so dass eine Verkürzung der Gesamtbearbeitungszeit ermöglicht wird.

Bevorzugt weist die Bearbeitungseinrichtung zumindest eine Linearachse auf, welche zum Bearbeiten des auf der Palette aufliegenden plattenförmigen Materials im Palettenwechsler entlang dem Grundgestell des Palettenwechslers verfahren und unabhängig von der Bearbeitungsmaschine angesteuert wird. Dadurch kann der Palettenwechsler autark arbeiten und zusätzliche Funktionalitäten durchführen.

Bevorzugt werden die Palette oder das Bearbeitungswerkzeug der Bearbeitungseinrichtung entlang einer Z-Achse oder beide relativ zueinander verfahren. Dadurch kann das Bearbeitungswerkzeug in einem vorbestimmten und geeigneten Abstand zum plattenförmigen Material positioniert werden. Gleichzeitig kann eine Anpassung an unterschiedlich dicke plattenförmige Materialien erfolgen.

Eine weitere bevorzugte Ausführungsform des Verfahrens sieht folgenden Ablauf vor: Ein auf der Palette im Palettenwechsler aufliegendes plattenförmiges Material wird von der Bearbeitungseinrichtung bearbeitet. Anschließend wird dieses plattenförmige Material in die Bearbeitungsmaschine eingefahren, um dort die Hauptbearbeitung, wie beispielsweise Stanzen, Schneiden, Biegen, Senken oder dergleichen, durchzuführen. Die weitere Palette im Palettenwechsler wird beladen und anschließend in eine Bearbeitungsposition im Palettenwechsler verfahren und durch die Bearbeitungseinrichtung bearbeitet. Die weitere Palette im Palettenwechsler wird darauffolgend in eine Zwischenposition oder Ruheposition verfahren, sofern diese nicht bereits eingenommen ist, so dass die Palette mit dem bearbeiteten plattenförmigen Material, welche das zumindest eine Werkstück und/oder Restgitter umfasst, aus der Bearbeitungsmaschine wieder zurück in den Palettenwechsler geführt werden kann. Darauffolgend wird die weitere Palette aus der Zwischenposition oder Ruheposition in eine Einfahrposition zum Einfahren in die Bearbeitungsmaschine verfahren. Darauffolgend wird die Palette mit dem bearbeiteten plattenförmigen Material, welche sich nunmehr im Palettenwechsler befindet, mit der Bearbeitungseinrichtung nachbearbeitet oder unmittelbar entladen. Dies kann in der Ruheposition, Einfahrposition oder Zwischenposition der Palette innerhalb des Grundgestells erfolgen. Darauffolgend beginnt dieser Arbeitszyklus von vorne.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht einer Bearbeitungsanlage,
Figur 2 eine perspektivische Ansicht einer Bearbeitungsmaschine,
Figur 3 eine schematische Seitenansicht der Bearbeitungsanlage gemäß Figur 1,
Figur 4 eine schematische Ansicht der Bearbeitungsanlage gemäß Figur 1 von oben,
Figur 5 eine perspektivische Ansicht auf einen Palettenwechsler,

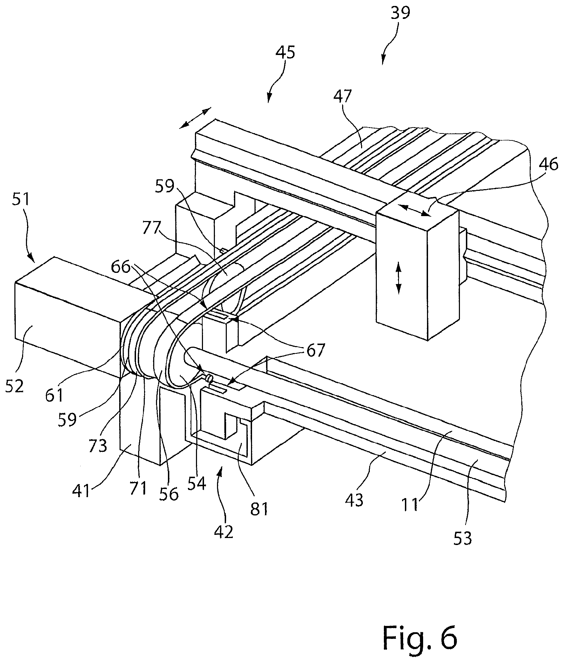

Figur 6 eine schematisch vergrößerte Ansicht eines Eckbereichs des Palettenwechslers gemäß Figur 5,
Figur 7 eine schematische Stirnansicht auf den Palettenwechsler mit einem Träger in einer ersten Hubstellung,
Figur 8 eine schematische Stirnansicht auf den Palettenwechsler mit dem Träger in einer zweiten Hubstellung,
Figur 9 eine schematische Stirnansicht auf den Palettenwechsler mit dem Träger in einem weiteren Arbeitsschritt zu Figur 8 in der zweiten Hubstellung,
Figur 10 eine schematische Seitenansicht des Palettenwechslers gemäß Figur 5,
Figuren 11a bis f schematische Ansichten für die Abfolge von Verfahrensschritten zum Bearbeiten von einem plattenförmigen Material und
Figur 12 eine schematische Seitenansicht einer alternativen Ausführungsform der Bearbeitungsanlage gemäß Figur 3.

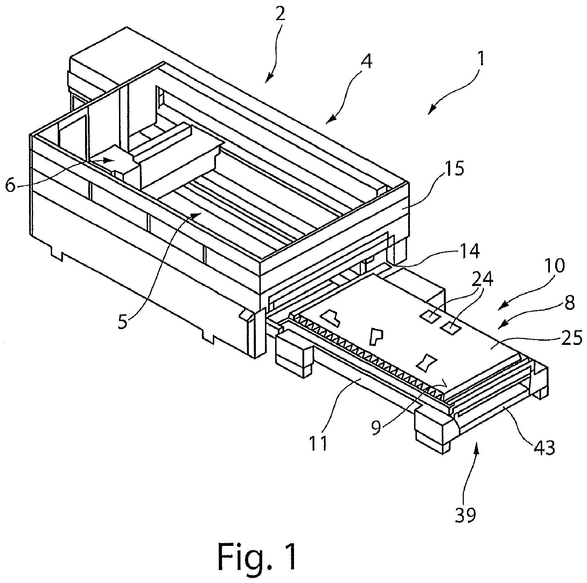

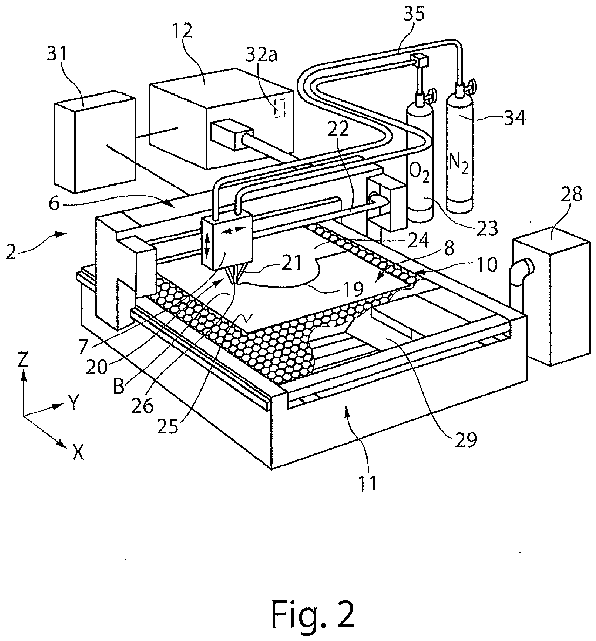

In Figur 1 ist perspektivisch eine Bearbeitungsanlage 1 zur trennenden Bearbeitung plattenförmiger Materialien 8 dargestellt, die aus Metall bestehen. Diese umfasst eine Bearbeitungsmaschine 2, welche im gezeigten Beispiel eine Laserschneidmaschine 2 ist, die in Figur 2 im Detail noch erörtert wird. Die Bearbeitungsanlage 1 könnte alternativ auch eine Plasmaschneidmaschine oder Stanz-Laser-Kombinationsmaschine umfassen. Die Bearbeitungsmaschine 2 wird durch eine Umhausung 4 umgeben. Innerhalb der Umhausung 4 ist eine Bearbeitungsstation 5 vorgesehen, in der eine Schneideinheit 6 mit zumindest einem Laserschneidkopf 7 (Figur 2) innerhalb einer horizontalen Bewegungsebene verfahrbar ist. Außerhalb der Umhausung 4 ist eine Be- und Entladestation 10 vorgesehen. Vorzugsweise ist diese Be- und Entladestation 10 durch einen sogenannten Palettenwechsler 39 gebildet. Diese umfasst wenigstens zwei verfahrbare Paletten 11, 43. Ergänzend und nicht näher dargestellt ist eine Handlingsvorrichtung der Be- und Entladestation 10 zugeordnet, durch welche ein plattenförmiges Material 8 in unbearbeiteter Form - also als Rohmaterial - auf die Palette 11 aufgelegt wird, bevor die Palette 11 in die Bearbeitungsstation 5 bewegt wird. Danach erfolgt eine Bearbeitung des plattenförmigen Materials 8, um Werkstücke 24, insbesondere Gutteile, herzustellen, wobei gleichzeitig auch Restteile und/oder ein Restgitter 25 entstehen. Anschließend wird das bearbeitete plattenförmige Material 8 mittels der Palette 11 wieder in die Be- und Entladestation 10 verfahren, so dass durch die Handlingseinrichtung das bearbeitete plattenförmige Material 8 beziehungsweise die Werkstücke 24 und das Restgitter 25 von der Palette 11 entnommen werden können.

Die Palette 11 wird durch eine Öffnung 14 in der Umhausung 4 ein- und ausgefahren. Die Öffnung 14 kann durch ein nicht näher dargestelltes Verschlusselement 15, wie beispielsweise eine Tür oder eine Klappe, verschlossen sein und wird während der Verfahrbewegung der Palette 11, 43 geöffnet.

In Figur 2 ist perspektivisch die Bearbeitungsmaschine als Laserschneidmaschine 2 dargestellt. Diese ist beispielsweise eine CO₂ -Laser-schneidmaschine mit einer CO₂-Laserquelle 12. Ein von der Laserquelle 12 erzeugter Laserstrahl 21 wird mittels einer Strahlführung 22 von nicht näher dargestellten Umlenkspiegeln zum Laserschneidkopf 7 geführt und in diesem fokussiert. Danach wird der Laserstrahl 21 durch eine Schneiddüse 20 senkrecht zur Oberfläche eines plattenförmigen Materials 8 ausgerichtet. Die Strahlachse (optische Achse) des Laserstrahls 21 verläuft senkrecht zur Oberfläche des plattenförmigen Materials 8. Der Laserstrahl 21 wirkt am Prozessort B gemeinsam mit einem Prozessgasstrahl 26 auf das plattenförmige Material 8 ein. Alternativ kann die Laserschneidmaschine 2 einen Festkörperlaser als Laserquelle aufweisen, dessen Strahlung mit Hilfe eines Lichtleitkabels zum Laserschneidkopf 7 geführt wird.

Zum Laserschneiden des plattenförmigen Materials 8 wird mit dem Laserstrahl 21 unter Zuführung von einem Prozessgasstrahl 26 zunächst eingestochen. Nachfolgend wird der Laserstrahl 21 über das plattenförmige Material 8 bewegt, so dass ein durchgängiger Schnittspalt 19 entsteht, an dem der Laserstrahl 21 das plattenförmige Material 8 durchtrennt. Dadurch entsteht zumindest ein freigeschnittenes Werkstück 24 im Restgitter 25.

Die während dem Einstechen und Laserschneiden entstehenden Partikel und Gase können mit Hilfe einer Absaugeinrichtung 28 aus einer Absaugkammer 29 abgesaugt werden.

Die Ansteuerung der Laserschneidmaschine 2 und/oder der Bearbeitungsanlage 1 erfolgt über eine Maschinen-Steuerungseinrichtung 31. Die Maschinen-Steuerungseinrichtung 31 steuert beispielsweise den Einstechvorgang und übernimmt die weiteren Steueraufgaben der Laserschneidmaschine 2 zur Bildung des Schnittspalts 19. Die Maschinen-Steuerungseinrichtung 31 steht mit einer Laser-Steuerungseinrichtung 32 in signaltechnischer Verbindung, die typischerweise in der Laserquelle 12 integriert ist.

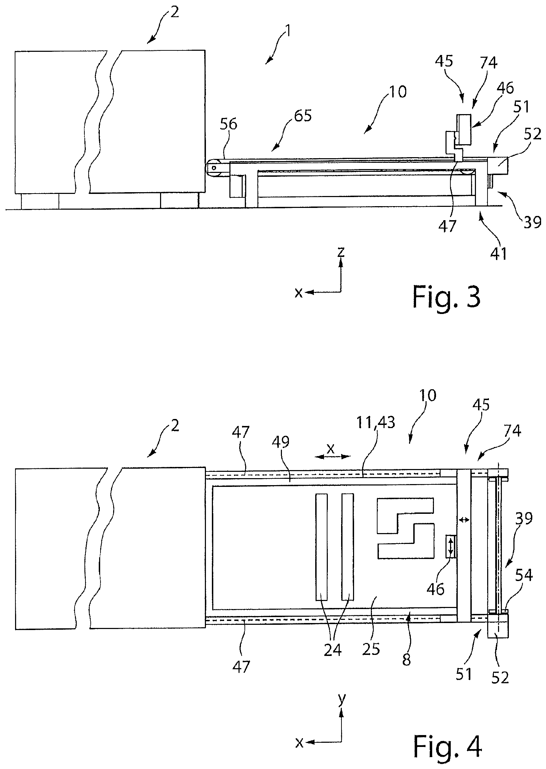

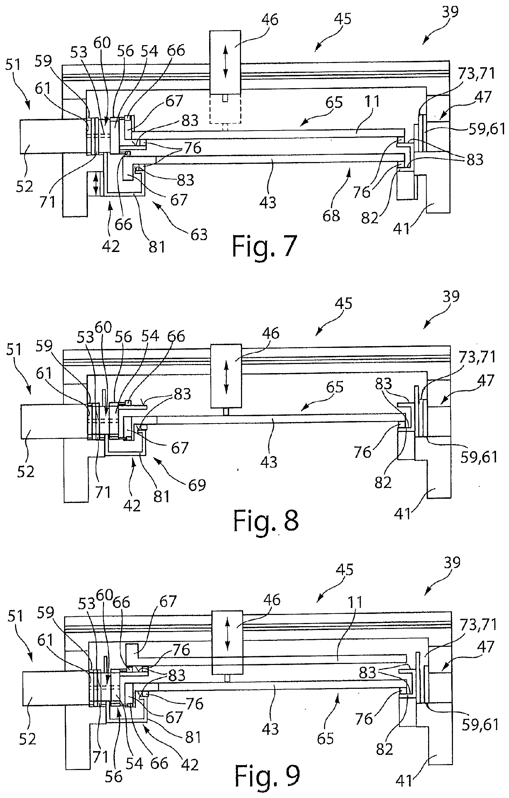

Figur 3 zeigt eine schematische Seitenansicht und die Figur 4 eine schematische Ansicht auf die Bearbeitungsanlage 1, bei welcher der Palettenwechsler 39 in der Be- und Entladestation 10 der Bearbeitungsmaschine 2 zugeordnet ist. Dieser Palettenwechsler 39 umfasst ein Grundgestell 41, welches einen Träger 42 (Figur 7) aufnimmt, der in Z-Richtung zum Grundgestell 41 verfahrbar ist. Dieser Träger 42 nimmt eine erste Palette 11 und eine weitere Palette 43 auf, wobei diese in einer Ausgangsposition 63, wie in Figur 3 dargestellt ist, unmittelbar übereinanderliegend angeordnet sind. Die Palette 11 ist in einer Einfahrposition 65 im Grundgestell 41 und die Palette 43 in einer Ruheposition 68 im Grundgestell 41 angeordnet. Die Paletten 11, 43 sind in der Horizontalen verfahrbar von einem Träger 42 aufgenommen und weisen vorzugsweise Roll- oder Gleitelemente 76 (Figur 7) auf, so dass diese aus dem Palettenwechsler 39 in die Bearbeitungsmaschine 2 ein- und ausgefahren werden können.

Der Palettenwechsler 39 weist eine Bearbeitungseinrichtung 45 auf, welche ein Bearbeitungswerkzeug 46 trägt. Diese Bearbeitungseinrichtung 45 kann beispielsweise durch zumindest eine verfahrbare Linearachse ausgebildet sein, welche entlang einer Führung 47, die am Grundgestell 41 vorgesehen ist, insbesondere in X-Richtung verfahrbar ist. Bevorzugt ist das Bearbeitungswerkzeug 46 in Y-Richtung entlang der Linearachse verfahrbar. Vorteilhafterweise kann das Bearbeitungswerkzeug 46 auch in Z-Richtung verfahrbar an der zumindest einen Linearachse vorgesehen sein. Die Bearbeitungseinrichtung 45 ist in den Figuren 3 und 4 in einer Ruheposition 74 dargestellt.

Die Bearbeitungseinrichtung 45 weist einen Arbeitsraum auf, der einer Auflagefläche 49 der Palette 11, 43 zur Aufnahme des plattenförmigen Materials 8 entspricht.

Das Bearbeitungswerkzeug 46 der Bearbeitungseinrichtung 45 ist bevorzugt für sogenannte zusätzliche Funktionalitäten vorgesehen, also insbesondere für solche Bearbeitungen, wie beispielsweise Gravieren, Markieren oder Kennzeichnen oder auch materialabtragende Bearbeitungen, welche zusätzlich oder ergänzend zu der Bearbeitung des plattenförmigen Materials 8 in der Bearbeitungsstation 5 der Bearbeitungsmaschine 2 erfolgen. Das Bearbeitungswerkzeug 46 ist auf diese Funktionalität jedoch nicht beschränkt, sondern kann auch einen Schneidkopf für eine Schneidstrahlbearbeitung, wie beispielsweise durch einen Laserstrahl, Plasmastrahl oder dergleichen, aufweisen.

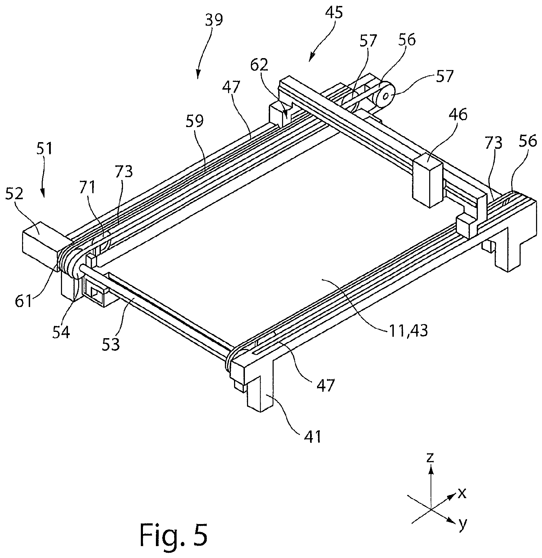

In Figur 5 ist eine perspektivische Ansicht des Palettenwechslers 39 dargestellt. An einem Endbereich des Grundgestells 41 ist ein Antrieb 51 positioniert. Dieser Antrieb 51 umfasst einen Motor 52, der an seiner Motorachse 53 zumindest ein Antriebsrad 54 aufnimmt, um ein Antriebselement 56, wie beispielsweise einen Riemen oder eine Kette, anzutreiben. Zwischen dem Antriebsrad 54 und einem gegenüberliegend angeordneten Gegenrad 57 wird das Antriebselement 56 geführt. Durch dieses Antriebselement 56 sind die Paletten 11, 43 in die Bearbeitungsmaschine 2 ein- und ausfahrbar angetrieben.

Bevorzugt ist parallel zum Antriebselement 56 ein Mitnehmerelement 59 positioniert, welches zum einen durch ein Mitnehmerrad 61 und diesem gegenüberliegend durch ein weiteres Gegenrad 57 geführt ist. Das Mitnehmerelement 59 kann als Kette, Riemen oder dergleichen ausgebildet sein. Das Mitnehmerrad 61 ist bevorzugt an der Motorachse 53 des Motors 52 angeordnet. Dieses ist bevorzugt unmittelbar benachbart zum Antriebsrad 54 positioniert. Das Mitnehmerelement 59 ist durch einen Mitnehmer 62 mit der Bearbeitungseinrichtung 45 gekoppelt, der vorzugsweise schaltbar ist und wahlweise mit der Bearbeitungseinrichtung 45 gekoppelt werden kann, so dass eine Verfahrbewegung des Mitnehmerelementes 59 eine Verfahrbewegung der Bearbeitungseinrichtung 45 ansteuert. Der Mitnehmer 62 kann als Stift ausgebildet sein und an einer Aufnahme der Bearbeitungseinrichtung 45 an- oder eingreifen.

Zwischen dem Antriebsrad 54 und der Motorachse 53 oder zwischen dem Mitnehmerrad 61 und der Motorachse 53 oder bei beiden ist eine schaltbare Kupplung 60 (Figur 7 bis 9) vorgesehen, so dass wahlweise das Antriebsrad 54 und/oder das Mitnehmerrad 61 durch denselben Motor 52 drehangetrieben werden. Dadurch kann beispielsweise zunächst die Bearbeitungseinrichtung 45 verfahrbar zum Grundgestell 41 angesteuert werden, um eine Bearbeitung des plattenförmigen Materials 8 durchzuführen. Nach Beendigung des Bearbeitungsschritts kann daraufhin das Antriebsrad 54 angesteuert werden, um die Palette 11, 43 in die Bearbeitungsmaschine 2 einzufahren oder aus der Bearbeitungsmaschine 2 auszufahren.

In den Figuren 7 bis 9 sind schematische Stirnansichten des Palettenwechslers 39 gemäß Figur 5 dargestellt. Der Träger 42 ist gemäß Figur 7 in einer Ausgangsposition, gemäß Figur 8 in einer oberen Hubstellung mit der bereits in die Bearbeitungsmaschine 2 eingefahrenen oberen Palette 11. Der Träger 42 ist gemäß Figur 9 in einer oberen Position beziehungsweise Hubstellung angeordnet.

An dem Antriebselement 56 ist ein erstes Koppelelement 66 vorgesehen, welches beispielsweise als Stift ausgebildet ist. Dieses erste Koppelelement 66 wirkt mit einem zweiten Koppelelement 67 zusammen, welches an der Palette 11, 43 angeordnet ist. In einer Ausgangsposition 63 sind diese dem ersten Koppelelement 66 zuweisend angeordnet. Dieses zweite Koppelelement 67 ist beispielsweise als eine U-förmige Führung ausgebildet. Die U-förmige Führung erstreckt sich in Z-Richtung.

In einer Ausgangsposition des Antriebselementes 56 weist das Antriebselement 56 an einem oberen Trum und einem unteren Trum jeweils ein erstes Koppelement 66 auf, die in einer gemeinsamen Z-Achse liegen. Diese beiden Koppelelemente 66 sind bevorzugt nahe dem Antriebsrad 54 positioniert. In einer Ausgangsposition 63 des Trägers 42, bei welcher die Paletten 11, 43 beide vorzugsweise deckungsgleich übereinanderliegend in dem Träger 42 angeordnet sind, liegen die zweiten Koppelelemente 67 der übereinanderliegenden Paletten 11, 43 ebenfalls in einer gemeinsamen Z-Achse ausgerichtet. Dabei entspricht die Lage der Z-Achse bezogen auf die X-Richtung der ersten Koppelelemente 66 denen der zweiten Koppelelemente 67. Dadurch greift gemäß Figur 7 bei der Anordnung des Trägers 42 in einer Ausgangsposition 63 das am oberen Trum angeordnete erste Koppelelement 66 in das zweite Koppelelement 67 der Palette 11 ein, und eine Wirkverbindung ist gegeben. Gleichzeitig kommt das erste Koppelelement 66 am unteren Trum des Antriebselementes 56 außer Eingriff zum zweiten Koppelelement 67 an der Palette 43. Bei der in Figur 7 dargestellten Wirkverbindung zwischen dem Antriebselement 56 und der Palette 11 wird diese beim Antreiben des Antriebsrads 54 durch den Motor 52 in die Bearbeitungsmaschine 2 eingefahren. Die weitere Palette 43 bleibt ruhend auf dem Träger 42.

Die Palette 11 ist gemäß Figur 7 in einer Einfahrposition 65 angeordnet, die in einer Ebene liegt, in der die Palette 11 in die Bearbeitungsmaschine 2 eingefahren werden kann. Die Palette 43 ist in einer unteren Ruhelage 68 positioniert.

In dieser Einfahrposition 65 der Palette 11 kann beispielsweise eine Bearbeitung des auf der Palette 11 aufliegenden plattenförmigen Materials 8 erfolgen.

Der Träger 42 im Grundgestell 41 des Palettenwechslers 39 besteht beispielsweise aus zwei Längsprofilen 81, 82, die getrennt zueinander längs des Grundgestells 41 verlaufen. Gemäß dem Ausführungsbeispiel sind die Längsprofile 81, 82 im Querschnitt gesehen voneinander abweichend ausgebildet. Auch können diese gleich ausgebildet sein. An jedem der Längsprofile 81, 82 ist eine Lauffläche 83 vorgesehen, auf welcher Rollenelemente 76 der Palette 11, 43 verfahrbar sind beziehungsweise abrollen. Bevorzugt weist die Lauffläche 83 an einem der beiden Längsprofile 81, 82 oder an beiden Längsprofilen 81, 82 eine Führung auf, wie beispielsweise eine Führungsnut oder eine Führungsrille, um die Paletten 11, 43 während dem Ein- und Ausfahren zu führen. Die Rollelemente 76 können bevorzugt als Radiallager oder dergleichen ausgebildet sein.

Das Längsprofil 81 ist bevorzugt im Querschnitt größer als das Längsprofil 82 ausgebildet, damit die Koppelelemente 67 an der Palette 11, 43 angeordnet sein können und mit den Koppelelementen 66 zusammenwirken können. Das Längsprofil 81, welches den Koppelelementen 66, 67 zugeordnet ist, weist bevorzugt einen G-förmigen Querschnitt auf. Das Längsprofil 82, welches dem Längsprofil 81 gegenüberliegt, ist bevorzugt C-förmig ausgebildet.

Zum Einfahren der Palette 43 in die Bearbeitungsmaschine 2 wird der Träger 42 in die obere Position 69 oder obere Hubstellung 69 gemäß Figur 8 verfahren, so dass die Palette 43 in der Ebene zum Einfahren in die Bearbeitungsmaschine 2 positioniert ist. Durch die vertikale Verfahrbewegung des Trägers 42 entlang der Z-Achse kommt die Wirkverbindung zwischen dem ersten Koppelelement 66 am oberen Trum des Antriebselementes 56 zum zweiten Koppelelement 67 an der Palette 11 außer Eingriff, und gleichzeitig erfolgt eine Wirkverbindung zwischen dem ersten Koppelelement 66 des unteren Trums des Antriebselements 56 zum zweiten Koppelelement 67 der Palette 43. Darauffolgend kann die Palette 43 in die Bearbeitungsmaschine 2 ein- und ausgefahren werden.

Vor dem Einfahren der Palette 43 kann eine Bearbeitung mit der Bearbeitungseinrichtung 45 erfolgen. Nachdem diese Bearbeitung durchgeführt ist, wird der Träger 42 entlang der Z-Achse wieder in eine untere Position beziehungsweise Ausgangsposition 63 verfahren, so dass die Palette 11 mit dem darauf aufliegenden bearbeiteten plattenförmigen Material aus der Bearbeitungsmaschine 2 in den Palettenwechsler 39 einfahren kann.

Darauffolgend wird der Träger 42 wieder in die obere Hubposition 69 übergeführt, so dass darauffolgend die untere Palette 43 in der Einfahrposition 65 ist und die Bearbeitungsmaschine 2 eingefahren werden kann. Darauffolgend wird der Träger 42 wieder in die Ausgangsposition abgesenkt, um den Entladevorgang der Palette 11 zu starten.

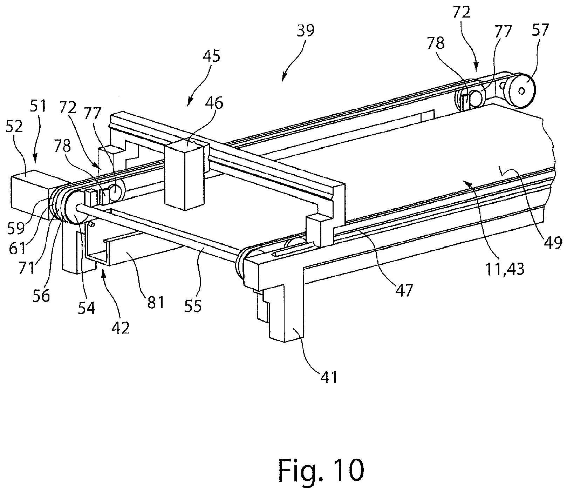

Die Verfahrbewegung des Trägers 42 in Z-Richtung kann beispielsweise über eine separat ansteuerbare Hubeinrichtung erfolgen. Die separat ansteuerbare Hubeinrichtung kann gemäß einer nicht näher dargestellten Ausführungsform in Form von Hubzylindern vorgesehen sein, die jeweils unterhalb des Trägers 42 positioniert sind und die Verfahrbewegung ansteuern. Bevorzugt ist eine Antriebsvorrichtung 70 vorgesehen, welche durch den Motor 52 ansteuerbar ist. Beispielsweise kann diese Antriebsvorrichtung 70 ein Zahnrad 71 aufweisen, welches an der Motorachse 53 angeordnet ist und ein weiteres Antriebselement 73, wie beispielsweise einen Zahnriemen, eine Kette oder dergleichen, antreibt. Dieses Antriebselement 73 kann ein Getriebe 72 antreiben. Dieses Getriebe 72 kann beispielsweise als ein an dem Grundgestell 41 gelagertes Zahnrad 77 und eine diesem Zahnrad 77 zugeordnete Zahnstange 78 ausgebildet sein, wobei die Zahnstange 78 fest an dem Träger 42 beziehungsweise den Längsprofilen 81, 82 angeordnet ist. Bevorzugt ist im jeweiligen Eckbereich der Palette 11, 43 ein solches Getriebe 72 vorgesehen, so dass eine gleichmäßige und verkippungsfreie Bewegung der Palette 11, 43 ermöglicht wird. Eine solche Anordnung ist schematisch und beispielhaft in der Seitenansicht in Figur 10 dargestellt. Das Zahnrad 71 ist bevorzugt durch eine schaltbare Kupplung 60 an der Motorachse 53 vorgesehen.

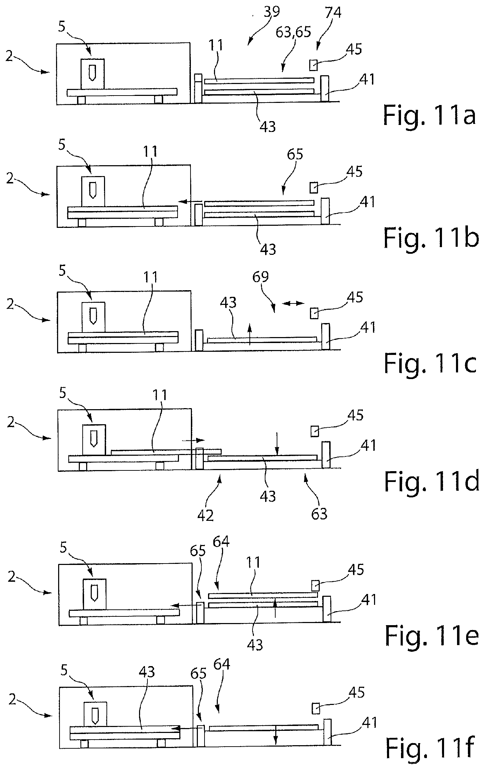

In den Figuren 11a bis 11f sind schematische Seitenansichten der Bearbeitungsmaschine 2 mit dem Palettenwechsler 39 in einer Seitenansicht dargestellt. Diese Figuren 11a bis 11f zeigen aufeinanderfolgende Verfahrensschritte eines beispielhaften Arbeitszyklus zum Bearbeiten des plattenförmigen Materials:

Der Palettenwechsler 39 nimmt die Palette 11, 43 auf, wobei der Träger 42 in einer Ausgangsposition 63 gemäß Figur 3 und 7 angeordnet ist. Auf die Palette 11 wird ein bevorzugt unbearbeitetes plattenförmiges Material 8 aufgelegt. Anschließend erfolgt eine Bearbeitung des plattenförmigen Materials 8 mit der Bearbeitungseinrichtung 45. Beispielsweise kann ein Markieren des plattenförmigen Materials 8, insbesondere ein Lasergravieren zum unverlierbaren Kennzeichnen und Identifizieren der Werkstücke 24, durchgeführt werden. Anschließend wird bevorzugt die Bearbeitungseinrichtung 45 wieder in eine Ruheposition 74 zurückgesetzt. Darauffolgend wird die Palette 11 in die Bearbeitungsmaschine 2 gemäß Figur 11b eingefahren. Anschließend wird ein nachfolgendes plattenförmiges Material 8 auf die Palette 43 aufgelegt, wobei diese Palette 43 sowohl in der Ruheposition 68 (Figur 7) als auch in einer Einfahrposition 65 (Figur 8) angeordnet sein kann.

Das plattenförmige Material 8 auf der in die Bearbeitungsmaschine 2 eingefahrenen Palette 11 wird in der Bearbeitungsstation 5 bearbeitet. Parallel kann das plattenförmige Material 8 auf der Palette 43 durch die Bearbeitungseinrichtung 45 bearbeitet werden (Figur 11c). Nachdem die Bearbeitung des plattenförmigen Materials 8 im Palettenwechsler 39 beendet ist, wird der Träger 42 in die Ausgangsposition 63 zurückgeführt, sofern dieser für die Bearbeitung verfahren wurde, so dass die Palette 11 aus der Bearbeitungsmaschine 2 herausgeführt und von dem Träger 42 aufgenommen wird, wie dies in Figur 11d dargestellt ist.

Darauffolgend wird gemäß Figur 11e der Träger 42 in eine obere Position 69 gemäß Figur 9 verfahren, so dass die Palette 43 in der Einfahrposition 65 ist und in die Bearbeitungsmaschine 2 eingefahren werden kann. Darauffolgend erfolgt gemäß Figur 11f die Bearbeitung des plattenförmigen Materials 8 auf der Palette 43 in der Bearbeitungsmaschine 2. Das bereits bearbeitete plattenförmige Material 8 beziehungsweise das oder die Werkstücke 24 und/oder das Restgitter 25 auf der Palette 11 kann durch die Bearbeitungseinrichtung 45 nachbearbeitet werden. Alternativ kann das bearbeitete plattenförmige Material, insbesondere das oder die Werkstücke 24 und/oder das Restgitter 25 von der Palette 11 entnommen werden, um dieses/diese auf einer Speicherpalette oder in einem Zwischenspeicher zu lagern oder einer weiteren Bearbeitungsstation überzuführen. Dabei kann der Träger 42 sowohl in einer Ausgangsposition 63 als auch in einer oberen Position 69 angeordnet sein.

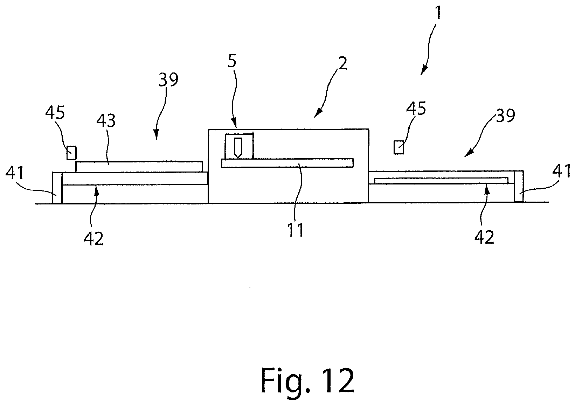

In Figur 12 ist ein alternativer Aufbau einer Bearbeitungsanlage 1 dargestellt. Dabei ist beidseitig zur Bearbeitungsmaschine 2 jeweils ein Palettenwechsler 39 vorgesehen. Dies ermöglicht, dass in jedem Palettenwechsler 39 unterschiedliche zusätzliche Funktionalitäten ausgeführt werden können, so dass der Bearbeitungsumfang und die Möglichkeiten zur Bearbeitung des plattenförmigen Materials 8 dadurch erweitert werden kann. Beispielsweise kann das plattenförmige Material 8 nach einer Vorbearbeitung beispielsweise mit einer Bearbeitungseinrichtung 45 im linken Palettenwechsler 39 in die Bearbeitungsmaschine 2 eingefahren werden, um dieses darin zu bearbeiten. Anschließend wird dieses zumindest teilweise bearbeitete plattenförmige Material 8 in den rechten Palettenwechsler 39 ausgefahren, um eine weitere Bearbeitung wie beispielsweise Gewindeschneiden oder Gewindeformen oder eine vorbereitende Arbeit durchzuführen, um darauffolgend die Palette 11 wieder zurück in die Bearbeitungsmaschine 2 zu führen, so dass nochmals eine Bearbeitung erfolgen kann. Die Palette 11 von dem rechten Palettenwechsler 39 kann auch unmittelbar zum linken Palettenwechsler 39 durchgeschleust werden oder die Palette 11 kann auch im rechten Palettenwechsler 39 entladen werden.

## Patentansprüche

1. Palettenwechsler mit wenigstens zwei von einem Grundgestell (41) aufgenommenen und verfahrbar angeordneten Paletten (11, 43), welche jeweils eine Auflagefläche (49) zur Aufnahme von einem plattenförmigen Material (8) aufweisen, mit einem Antrieb (51), durch welchen die zumindest eine Palette (11, 43) vom Grundgestell (41) in eine Bearbeitungsmaschine (2) verfahren und aus dieser herausgeführt wird, wobei der Antrieb (51) einen Motor (52) umfasst, der ein Antriebselement (56) antreibt, welches die zumindest eine Palette (11, 43) verfährt, **dadurch gekennzeichnet, dass** an dem Grundgestell (41) eine Bearbeitungseinrichtung (45) vorgesehen ist, die unabhängig von der Bearbeitungsmaschine (2) zum Bearbeiten von plattenförmigem Material (8) ist und zur Bearbeitung des auf der Palette (11, 43) aufliegenden plattenförmigen Materials (8) vorgesehen ist.

2. Palettenwechsler nach Anspruch 1, **dadurch gekennzeichnet, dass** die Bearbeitungseinrichtung (45) ein Bearbeitungswerkzeug (46) aufweist, welches zumindest teilweise innerhalb der Auflagefläche (49) der Palette (11, 43) verfahrbar ist und vorzugsweise die Bearbeitungseinrichtung (45) eine in X-Richtung entlang einer Ein- und Ausfahrbewegung der Palette (11, 43) verfahrbare Linearachse aufweist, an welcher das in Y-Richtung verfahrbare Bearbeitungswerkzeug (46) vorgesehen ist, welches vorzugsweise von einer in Z-Richtung verfahrbaren Linearachse aufgenommen ist.

3. Palettenwechsler nach einem der vorhergehenden Ansprüche, **dadurch gekennzeichnet, dass** der Antrieb (51) eine Verfahrbewegung der Palette (11, 43) vom Grundgestell (41) in die Bearbeitungsmaschine (2) und wieder zurück und eine Verfahrbewegung der Bearbeitungseinrichtung (45) entlang des Grundgestells (41) ansteuert.

4. Palettenwechsler nach einem der vorhergehenden Ansprüche, **dadurch gekennzeichnet, dass** die Bearbeitungseinrichtung (45) von einem Mitnehmerelement (59), vorzugsweise einem schaltbaren Mitnehmerelement (59), verfahrbar angetrieben ist, welches vorzugsweise von dem Motor (52) des Antriebs (51) angetrieben ist.

5. Palettenwechsler nach Anspruch 4, **dadurch gekennzeichnet, dass** das Antriebselement (56) und das Mitnehmerelement (59) von derselben Motorachse (53) des Motors (52) angetrieben sind und vorzugsweise zwischen der Motorachse (53) und dem Antriebselement (56) oder der Motorachse (53) und dem Mitnehmerelement (59) oder beiden eine schaltbare Kupplung (60) vorgesehen ist.

6. Palettenwechsler nach Anspruch 4 oder 5, **dadurch gekennzeichnet, dass** auf derselben Motorachse (53) des Motors (52) ein Antriebsrad (54) für das Antriebselement (56) und benachbart dazu auf der Motorachse (53) ein Mitnehmerrad (61) für das Mitnehmerelement (59) vorgesehen ist.

7. Palettenwechsler nach einem der vorhergehenden Ansprüche, **dadurch gekennzeichnet, dass** an einem Träger (42) des Grundgestells (41) zumindest zwei verfahrbare Paletten (11, 43) aufgenommen sind, welche in einer Ausgangsposition (63) übereinanderliegend im Träger (42) angeordnet sind und vorzugsweise der Träger (42) in Z-Richtung relativ zum Grundgestell (41) verfahrbar ist, so dass eine der Paletten (11, 43) wahlweise in eine Einfahrposition (65) zum Ein- und Ausfahren der Palette (11; 43) in die Bearbeitungsmaschine (2) positioniert und vorzugsweise die weitere Palette (43; 11) in einer Zwischenposition (64) oder Ruheposition (68) ist.

8. Palettenwechsler nach Anspruch 7, **dadurch gekennzeichnet, dass** der Träger (42) aus zwei getrennt zueinander ausgebildeten Längsprofilen (81, 82) besteht, welche jeweils für die zumindest zwei Paletten (11, 43) Laufflächen (83) aufweisen, durch welche die Palette (11, 43) verfahrbar und vorzugsweise geführt sind.

9. Palettenwechsler nach einem der vorhergehenden Ansprüche, **dadurch gekennzeichnet, dass** an dem Antriebselement (56) zumindest ein erstes Koppelelement (66) und an jeder Palette (11, 43) zumindest ein weiteres Koppelelement (67) vorgesehen ist und während oder nach dem Verfahren der einen Palette (11, 43) in die Einfahrposition (65) das erste Koppelelement (66) mit dem weiteren Koppelelement (67) der einen Palette (11; 43) in Eingriff und mit der weiteren Palette (43; 11), sofern von dem Träger (42) aufgenommen, außer Eingriff kommt und vorzugsweise das an dem Antriebselement (56) angeordnete erste Koppelelement (66) als ein auf die Palette (11, 43) zuweisender Stift ausgebildet ist und das weitere an der Palette (11, 43) angeordnete Koppelelement (67) als eine U-förmige Führung ausgebildet ist, in welche der Stift bei einer Verfahrbewegung der Palette (11, 43) in Z-Richtung bei der jeweiligen Palette (11, 43) in Eingriff oder außer Eingriff kommt.

10. Palettenwechsler nach Anspruch 7, **dadurch gekennzeichnet, dass** der Träger (42) mit einer Hubbewegung relativ zum Grundgestell (41) durch den Motor (52), vorzugsweise eine auf der Motorachse (53) des Motors (52) angeordnete oder damit gekoppelte Antriebskomponente (71), verfahrbar ist und vorzugsweise zwischen dem Grundgestell (41) und einer linken und rechten Längsseite der Palette (11, 43) jeweils das Antriebselement (56) und die Antriebsvorrichtung (70) vorgesehen sind, die durch ein sich über die Breite des Grundgestells (41) erstreckende Motorachse (53) angetrieben sind.

11. Palettenwechsler nach einem der vorhergehenden Ansprüche, **dadurch gekennzeichnet, dass** das Bearbeitungswerkzeug (46) der Bearbeitungseinrichtung (45) ein materialabtragendes Werkzeug ist, insbesondere ein Bearbeitungswerkzeug (46) zur Durchführung von Zusatzfunktionen zur Bearbeitungsmaschine (2), vorzugsweise zum Entgraten, Bohren, Gewindeschneiden, Beschriften oder Markieren, ist.

12. Verfahren zum Bearbeiten eines auf einer verfahrbaren Palette (11, 43) angeordneten plattenförmigen Materials (8),
- bei dem auf eine Auflagefläche (49) der Palette (11, 43) von einem Palettenwechsler (39) mit zumindest zwei Paletten (11, 43) das plattenförmige Material (8) aufgelegt wird,
- bei dem die beladene Palette (11, 43) zum Bearbeiten des plattenförmigen Materials (8) in die Bearbeitungsmaschine (2) eingefahren und nach dem Bearbeiten aus der Bearbeitungsmaschine (2) herausgefahren und dem Palettenwechsler (39) zugeführt wird,
**dadurch gekennzeichnet, dass** vor oder nach dem Bearbeiten des plattenförmigen Materials (8) in der Bearbeitungsmaschine (2) das auf der Palette (11, 43) aufliegende plattenförmige Material (8) in dem Palettenwechsler (39) mit zumindest einer Bearbeitungseinrichtung (45) bearbeitet und die dem Palettenwechsler (39) zugeordnete Bearbeitungseinrichtung (45) getrennt von der Bearbeitungsmaschine (2) angesteuert wird.

13. Verfahren nach Anspruch 12, **dadurch gekennzeichnet, dass** während der Bearbeitung der beladenen und in die Bearbeitungsmaschine (2) eingefahrenen Palette (11; 43) ein auf der weiteren im Palettenwechsler (39) positionierten Palette (43; 11) aufliegendes plattenförmiges Material (8) mit der Bearbeitungseinrichtung (45) bearbeitet wird.

14. Verfahren nach Anspruch 12 oder 13, **dadurch gekennzeichnet, dass** die Bearbeitungseinrichtung (45) zumindest eine Achse aufweist, welche zum Bearbeiten des plattenförmigen Materials (8) auf der Palette (11, 43) im Palettenwechsler (39) entlang dem Grundgestell (41) des Palettenwechslers (39) verfahren wird und zumindest ein an der Linearachse angeordnetes Bearbeitungswerkzeug (46) angesteuert wird.

15. Verfahren nach einem der Ansprüche 12 bis 14, **dadurch gekennzeichnet, dass** die Palette (11, 43) oder das Bearbeitungswerkzeug (46) entlang einer Z-Achse der Bearbeitungseinrichtung (45) oder beide relativ zueinander zur Positionierung des plattenförmigen Materials (8) zum Bearbeitungswerkzeug (46) in Abhängigkeit der Auswahl des Bearbeitungswerkzeug (46) und/oder der Materialdicke des plattenförmigen Materials (8) im Abstand aufeinander eingestellt und zueinander verfahren werden.

16. Verfahren nach einem der Ansprüche 12 bis 15, **dadurch gekennzeichnet, dass**
- ein auf der Palette (11, 43) aufliegendes plattenförmiges Material (8) mit der Bearbeitungseinrichtung (45) im Palettenwechsler (39) bearbeitet wird,
- anschließend das im Palettenwechsler (39) bearbeitete plattenförmige Material (8) in die Bearbeitungsmaschine (2) eingefahren wird,
- die weitere Palette (43; 11) mit einem plattenförmigen Material beladen und vorzugsweise mit der Bearbeitungseinrichtung (45) bearbeitet wird,
- die weitere Palette (43; 11) im Palettenwechsler (39) in eine Zwischenposition (64) oder Ruheposition (68) verfahren und die Palette (11, 43) mit dem bearbeiteten plattenförmigen Material (8) aus der Bearbeitungsmaschine (2) heraus in den Palettenwechsler (39) geführt wird,
- die weitere Palette (43, 11) aus der Zwischenposition (64) oder Ruheposition (68) in eine Einfahrposition (65) zum Einfahren in die Bearbeitungsmaschine (2) verfahren und anschließend in die Bearbeitungsmaschine (2) eingefahren wird, und
- die Palette (11; 43) mit dem bearbeiteten plattenförmigen Material (8), welches zumindest ein Werkstück (24) und/oder Restgitter (25) umfasst, mit der Bearbeitungseinrichtung (45) nachbearbeitet oder das bearbeitete plattenförmige Material (8) von der Palette (11; 43) entnommen wird.

## Claims

1. Pallet changer with at least two movably arranged pallets (11, 43) received by a main frame (41), which pallets each have a support surface (49) for receiving a sheet-like material (8), with a drive (51), by means of which the at least one pallet (11, 43) is moved from the main frame (41) into a processing machine (2) and is guided out therefrom, wherein the drive (51) comprises a motor (52), which drives a drive element (56), which moves the at least one pallet (11, 43), **characterised in that** a processing device (45) is provided on the main frame (41) which is independent of the processing machine (2)for processing sheet-like material (8) and the processing device (45) is provided to process the sheet-like material (8) resting on the pallet (11, 43) .

2. Pallet changer according to claim 1, **characterised in that** the processing device (45) has a processing tool (46) which is moveable at least in part within the support surface (49) of the pallet (11, 43), and preferably the processing device (45) has a linear axis which is moveable in the X-direction along a drive-in and drive-out movement of the pallet (11, 43) and on which the processing tool (46) moveable in the Y-direction is provided, which processing tool is preferably received by a linear axis moveable in the Z-direction.

3. Pallet changer according to any one of the preceding claims, **characterised in that** the drive (51) controls a movement of the pallet (11, 43) from the main frame (41) into the processing machine (2) and back again and a movement of the processing device (45) along the main frame (41).

4. Pallet changer according to any one of the preceding claims, **characterised in that** the processing device (45) is driven movably by a driver element (59), preferably a switchable driver element (59), which is driven preferably by the motor (52) of the drive (51).

5. Pallet changer according to claim 4, **characterised in that** the drive element (56) and the driver element (59) are driven by the same motor axis (53) of the motor (52), and preferably a switchable clutch (60) is provided between the motor axis (53) and the drive element (56) or the motor axis (53) and the driver element (59) or in both cases.

6. Pallet changer according to claim 4 or 5, **characterised in that** a drive wheel (54) for the drive element (56) is provided on the same motor axis (53) of the motor (52), and adjacently thereto a driver wheel (61) for the driver element (59) is provided on the motor axis (53).

7. Pallet changer according to any one of the preceding claims, **characterised in that** at least two moveable pallets (11, 43) are received on a carrier (42) of the main frame (41), which pallets are arranged one above the other in the carrier (42) in a starting position (63), and preferably the carrier (42) is moveable in the Z-direction relative to the main frame (41), so that one of the pallets (11, 43) is positioned selectively in a drive-in position (65) for driving the pallet (11; 43) into and out of the processing machine (2), and the preferably further pallet (43; 11) is in an intermediate position (64) or rest position (68) .

8. Pallet changer according to claim 7, **characterised in that** the carrier (42) consists of two longitudinal profiles (81, 82) formed separately from one another, which each have running surfaces (83) for the at least two pallets (11, 43), by means of which running surfaces the pallet (11, 43) is moveable and preferably is guided.

9. Pallet changer according to any one of the preceding claims, **characterised in that** at least one first coupling element (66) is provided on the drive element (56) and at least one further coupling element (67) is provided on each pallet (11, 43), and while one pallet (11, 43) is being moved into the drive-in position (65) or after such a movement, the first coupling element (66) is engaged with the further coupling element (67) of said pallet (11; 43) and is disengaged from the further pallet (43; 11), if this is received by the carrier (42), and preferably first coupling element (66) arranged on the drive element (56) is designed as a pin pointing towards the pallet (11, 43), and the further coupling element (67) arranged on the pallet (11, 43) is designed as a U-shaped guide, in which/from which the pin is engaged/disengaged in the case of a specific pallet (11, 43) when said pallet (11, 43) moves in the Z-direction.

10. Pallet changer according to claim 7, **characterised in that** the carrier (42) is moveable by a lifting movement relative to the main frame (41) by the motor (52), preferably a drive component (71) arranged on the motor axis (53) of the motor (52) or coupled thereto, and the drive element (56) and the drive device (70) are provided between the main frame (41) and a left and right longitudinal side of the pallet (11, 43) respectively and are driven by a motor axis (53) extending over the width of the main frame (41).

11. Pallet changer according to any one of the preceding claims, **characterised in that** the processing tool (46) of the processing device (45) is a material-removing tool, in particular a processing tool (46) for carrying out additional functions compared to the processing machine (2), preferably for deburring, drilling, thread tapping, labelling or marking.

12. Method for processing a sheet-like material (8) arranged on a moveable pallet (11, 43),
- in which the sheet-like material (8) is placed on a support surface (49) of the pallet (11, 43) by a pallet changer (39) with at least two pallets (11, 43),
- in which the loaded pallet (11, 43) is driven into the processing machine (2) for processing the sheet-like material (8) and is driven out from the processing machine (2) after the processing and is fed to the pallet changer (39),
**characterised in that**, before or after the processing of the sheet-like material (8) in the processing machine (2), the sheet-like material (8) resting on the pallet (11, 43) is processed in the pallet changer (39) by at least one processing device (45) and the processing device (45) associated with the pallet changer (39) is controlled separately from the processing machine (2) .

13. Method according to claim 12, **characterised in that**, during the processing of the loaded pallet (11; 43) driven into the processing machine (2), a sheet-like material (8) resting on the further pallet (43; 11) positioned in the pallet changer (39) is processed by the processing device (45).

14. Method according to claim 12 or 13, **characterised in that** the processing device (45) has at least one axis, which is moved along the main frame (41) of the pallet changer (39) for processing of the sheet-like material (8) on the pallet (11, 43) in the pallet changer (39) and at least one processing tool (46) arranged on the linear axis is controlled.

15. Method according to any one of claims 12 to 14, **characterised in that** the pallet (11, 43) or the processing tool (46) is set at a distance from the other and moved relative to the other, or both are set at a distance from one another and are moved relative to one another along a Z-axis of the processing device (45) for positioning of the sheet-like material (8) in relation to the processing tool (46) depending on the selection of the processing tool (46) and/or the material thickness of the sheet-like material (8).

16. Method according to any one of claims 12 to 15, **characterised in that**
- a sheet-like material (8) resting on the pallet (11, 43) is processed with the processing device (45) in the pallet changer (39),
- the sheet-like material (8) processed in the pallet changer (39) is then driven into the processing machine (2),
- the further pallet (43; 11) is loaded with a sheet-like material and is preferably processed by the processing device (45),
- the further pallet (43; 11) in the pallet changer (39) is moved into an intermediate position (64) or rest position (68), and the pallet (11, 43) with the processed sheet-like material (8) is guided out from the processing machine (2) into the pallet changer (39),
- the further pallet (43, 11) is moved from the intermediate position (64) or rest position (68) into a drive-in position (65) for being driven into the processing machine (2) and is then driven into the processing machine (2), and
- the pallet (11; 43) with the processed sheet-like material (8), which comprises at least one workpiece (24) and/or sheet skeleton (25), is subjected to secondary processing by the processing device (45) or the processed sheet-like material (8) is removed from the pallet (11; 43).

## Revendications

1. Changeur de palettes pourvu d'au moins deux palettes (11, 43) reçues par un bâti (41) et disposées de manière à pouvoir être déplacées, lesquelles présentent respectivement une surface d'appui (49) destinée à recevoir un matériau (8) en forme de plaque, pourvu d'un entraînement (51) grâce auquel ladite au moins une palette (11, 43) est déplacée du bâti (41) jusque dans une machine d'usinage (2) et est ensuite sortie de celle-ci, l'entraînement (51) comprenant un moteur (52) qui entraîne un élément d'entraînement (56) qui déplace ladite au moins une palette (11, 43), **caractérisé en ce que** sur le bâti (41) est prévue une installation d'usinage (45) qui est indépendante de la machine d'usinage (2) destinée à l'usinage du matériau (8) en forme de plaque et qui est prévue pour usiner le matériau (8) en forme de plaque reposant sur la palette (11, 43).

2. Changeur de palettes selon la revendication 1, **caractérisé en ce que** l'installation d'usinage (45) présente un outil d'usinage (46) qui peut être au moins en partie déplacé à l'intérieur de la surface d'appui (49) de la palette (11, 43) et **en ce que** l'installation d'usinage (45) présente de préférence un axe linéaire pouvant se déplacer en direction X, le long d'un mouvement d'entrée et de sortie de la palette (11, 43) et sur lequel est prévu l'outil d'usinage (46) déplaçable en direction Y, lequel est logé de préférence dans un axe linéaire pouvant de préférence se déplacer en direction Z.

3. Changeur de palettes selon l'une quelconque des revendications précédentes, **caractérisé en ce que** l'entraînement (51) active un mouvement de déplacement de la palette (11, 43), et ce depuis le bâti (41) jusque dans la machine d'usinage (2) et inversement, et un mouvement de déplacement de l'installation d'usinage (45) le long du bâti (41).

4. Changeur de palettes selon l'une quelconque des revendications précédentes, **caractérisé en ce que** l'installation d'usinage (45) est entraînée de manière à pouvoir être déplacée par un élément entraîneur (59), de préférence par un élément entraîneur (59) débrayable, lequel est de préférence entraîné par le moteur (52) de l'entraînement (51).

5. Changeur de palettes selon la revendication 4, **caractérisé en ce que** l'élément d'entraînement (56) et l'élément entraîneur (59) sont entraînés par le même axe moteur (53) du moteur (52) et **en ce qu'**un accouplement débrayable (60) est prévu de préférence entre l'axe moteur (53) et l'élément d'entraînement (56) ou entre l'axe moteur (53) et l'élément entraîneur (59) ou entre les deux à la fois.

6. Changeur de palettes selon la revendication 4 ou 5, **caractérisé en ce que** sur le même axe moteur (53) du moteur (52) est prévue une roue d'entraînement (54) pour l'élément d'entraînement (56) et que sur ledit axe moteur (53) est prévue, de manière contiguë à celle-ci, une roue d'entraîneur (61) pour l'élément entraîneur (59).

7. Changeur de palettes selon l'une quelconque des revendications précédentes, **caractérisé en ce que** sur un support (42) du bâti (41) sont reçues au moins deux palettes (11, 43) déplaçables qui, dans une position initiale (63), sont disposées l'une sur l'autre dans le support (42) et **en ce que** le support (42) peut être déplacé de préférence en direction Z par rapport au bâti (41) de telle sorte que l'une des palettes (11, 43) au choix est positionnée dans une position d'entrée (65) dans laquelle ladite palette (11 ; 43) est prête à entrer dans la machine d'usinage (2) ou à sortir de celle-ci et que de préférence l'autre palette (43 ; 11) se trouve dans une position intermédiaire (64) ou une position de repos (68).

8. Changeur de palettes selon la revendication 7, **caractérisé en ce que** le support (42) est constitué par deux profilés longitudinaux (81, 82) séparés l'un de l'autre, lesquels présentent respectivement pour lesdites au moins deux palettes (11, 43) des surfaces de roulement (83) grâce auxquelles les palettes (11, 43) peuvent être déplacées et de préférence guidées.

9. Changeur de palettes selon l'une quelconque des revendications précédentes, **caractérisé en ce que** sur l'élément d'entraînement (56) est prévu au moins un premier élément de couplage (66) et que sur chaque palette (11, 43) est prévu au moins un autre élément de couplage (67), et **en ce que** pendant ou après le déplacement de l'une quelconque palette (11, 43) dans la position d'entrée (65), le premier élément de couplage (66) entre en prise avec l'autre élément de couplage (67) de ladite une palette (11 ; 43) et, ce faisant, n'est plus en prise avec l'autre palette (43 ; 11) dans la mesure où celle-ci est reçue par le support (42), et **en ce que** de préférence le premier élément de couplage (66) disposé sur l'élément d'entraînement (56) est réalisé sous la forme d'un ergot orienté vers la palette (11, 43) et que l'autre élément de couplage (67) disposé sur la palette (11, 43) est réalisé sous la forme d'un guide en U dans lequel l'ergot, lors d'un mouvement de déplacement de la palette (11, 43) en direction Z, entre en prise ou sort de prise selon la palette concernée.

10. Changeur de palettes selon la revendication 7, **caractérisé en ce que** le support (42) peut être déplacé grâce à un mouvement de course effectué par rapport au bâti (41) par le moteur (52), de préférence par un composant d'entraînement (71) disposé sur l'axe moteur (53) du moteur (52) ou couplé à celui-ci, et **en ce que** de préférence entre le bâti (41) et un côté longitudinal gauche et un côté longitudinal droit de la palette (11, 43) sont prévus respectivement l'élément d'entraînement (56) et le dispositif d'entraînement (70) lesquels sont entraînés par un axe moteur (53) s'étendant sur la largeur du bâti (41).

11. Changeur de palettes selon l'une quelconque des revendications précédentes, **caractérisé en ce que** l'outil d'usinage (46) de l'installation d'usinage (45) est un outil d'enlèvement de matière, en particulier un outil d'usinage (46) destiné à effectuer des fonctions supplémentaires à celles remplies par la machine d'usinage (2), de préférence pour ébavurer, percer, fileter, réaliser des inscriptions ou des marquages.

12. Procédé destiné à usiner un matériau (8) en forme de plaque disposé sur une palette (11, 43) déplaçable,
- lors duquel le matériau (8) en forme de plaque est déposé sur une surface d'appui (49) de la palette (11, 43) par un changeur de palettes (39) pourvu d'au moins deux palettes (11, 43),
- lors duquel la palette (11, 43) chargée est entrée dans la machine d'usinage (2) en vue de l'usinage du matériau (8) en forme de plaque et, une fois l'usinage terminée, est sortie de ladite machine d'usinage (2) et est amenée au changeur de palettes (39),
**caractérisé en ce que**, avant ou après l'usinage du matériau (8) en forme de plaque dans la machine d'usinage (2), le matériau (8) en forme de plaque reposant sur la palette (11, 43) située dans le changeur de palettes (39) est usiné à l'aide d'au moins une installation d'usinage (45) et l'installation d'usinage (45) affectée au changeur de palettes (39) est activée de manière séparée de la machine d'usinage (2).

13. Procédé selon la revendication 12, **caractérisé en ce que**, pendant l'usinage de la palette (11 ; 43) chargée et entrée dans la machine d'usinage (2), un matériau (8) en forme de plaque reposant sur l'autre palette (43 ; 11) positionnée dans le changeur de palettes (39) est usiné à l'aide de l'installation d'usinage (45).

14. Procédé selon la revendication 12 ou 13, **caractérisé en ce que** l'installation d'usinage (45) présente au moins un axe qui est déplacé le long du bâti (41) du changeur de palettes (39) en vue d'usiner le matériau (8) en forme de plaque reposant sur la palette (11 ; 43) située dans ledit changeur de palettes (39), et **en ce qu'**au moins un outil d'usinage (46) disposé sur l'axe linéaire est activé.

15. Procédé selon l'une quelconque des revendications 12 à 14, **caractérisé en ce que** la palette (11, 43) ou l'outil d'usinage (46) est déplacé(e) le long d'un axe Z de l'installation d'usinage (45) ou qu'ils sont tous deux déplacés l'un par rapport à l'autre et réglés de manière à présenter un espacement donné entre eux en vue de positionner le matériau (8) en forme de plaque par rapport à l'outil d'usinage (46), et ce en fonction du choix de l'outil d'usinage (46) et/ou de l'épaisseur de matériau du matériau (8) en forme de plaque.

16. Procédé selon l'une quelconque des revendications 12 à 15, **caractérisé en ce que**
- un matériau (8) en forme de plaque reposant sur la palette (11, 43) est usiné dans le changeur de palettes (39) à l'aide de l'installation d'usinage (45),
- puis une fois usiné, le matériau (8) en forme de plaque situé dans le changeur de palettes (39) est entré dans la machine d'usinage (2),
- l'autre palette (43 ; 11) est chargée d'un matériau en forme de plaque et est de préférence usinée à l'aide de l'installation d'usinage (45),
- l'autre palette (43 ; 11) située dans le changeur de palettes (39) est déplacée dans une position intermédiaire (64) ou une position de repos (68) et la palette (11, 43) chargée du matériau (8) en forme de plaque usiné est sortie de la machine d'usinage (2) et est amenée dans le changeur de palettes (39),
- l'autre palette (43, 11) est déplacée de la position intermédiaire (64) ou de la position de repos (68) dans une position d'entrée (65) afin d'entrer dans la machine d'usinage (2) et est ensuite rentrée dans ladite machine d'usinage (2), et
- la palette (11 ; 43) chargée du matériau (8) en forme de plaque usiné, lequel comprend au moins une pièce usinée (24) et/ou une grille résiduelle (25), subit une opération de finissage à l'aide de l'installation d'usinage (45) ou le matériau (8) en forme de plaque usiné est retiré de la palette (11 ; 43) .
